# EUROPEAN PATENT SPECIFICATION

(11) **EP 0 487 987 B1**
(45) Date of publication and mention of the grant of the patent: **24.01.1996**
(21) Application number: 91119461.1
(22) Date of filing: 14.11.1991
(51) Int. Cl.: G05D 23/02

(54) **Shut-off device**
Sperrvorrichtung
Dispositif d'arrêt

(30) Priority: 28.11.1990 AU 3581/90; 03.04.1991 AU 5389/91
(43) Date of publication of application: 03.06.1992
(73) Proprietor: Pizzey, Harley A, Notting Hill, Victoria 3168 (AU); Robards, Francis S., Peakhurst, New South Wales 2210 (AU)
(72) Inventor: Pizzey, Harley A, Notting Hill, Victoria 3168 (AU); Robards, Francis S., Peakhurst, New South Wales 2210 (AU)
(74) Representative: Füchsle, Klaus, Dipl.-Ing.

(56) References cited:
- GB-A- 417 312
- US-A- 4 210 284
- US-A- 4 281 790

## Description

This invention relates to a shut-off device for supplying water up to a preset and predetermined temperature and for shutting off hot water supply completely should cold water supply cease to flow for any reason or if hot water above the predetermined temperature is turned on by itself.

Hot and cold water is supplied to shower roses or taps via a mixing chamber in which the hot and cold water is mixed to provide water of a desired temperature. When a shower or bath is being used by a hospital patient who does not have full freedom of movement or invalid or the like, there is a possibility that if the supply of cold water is shut off, scolding water will be supplied to the shower rose or bath tap and result in serious burns to the user. It is therefore desirable to provide a shut-off device which shuts of the flow of hot water in the event that the temperature of the water exceeds a predetermined limit.

Thermostatic mixing vales are also used with the supply of water to provide some control over the temperature of water supplied to a bath or shower. Thermostatic mixing valves are specifically designed to hold a selected temperature and generally have an adjustment knob which can be manipulated to vary the temperature of water which is supplied through the valve. Whilst thermostatic mixing valves can deliver water at a specifically designated temperature they are not suitable as shut-off devices to shut off the supply of hot water when it reaches a predetermined temperature because the thermostatic mixing valve is normally provided with a control knob which can be manipulated by a user to supply water of a predetermined temperature and may therefore be set at too high a temperature and will not shut off water which is supplied at that high temperature. Thus, thermostatic mixing valves or thermostats themselves are not generally used as shut-off devices because they are primarily intended to supply water at a desired temperature rather than to shut off water at a particular temperature. Shut-off devices are not designed to provide water at a particular temperature and temperature control is achieved by usual manipulation of the taps or faucets to which the shut-off device is connected.

Some attempts have been proposed to provide shut-off devices which can achieve this but most have failed since they do not react quick enough to prevent scolding water being provided to a tap or shower rose.

Existing shut-off devices also suffer from the problem that they cannot be quickly reset. Thus, if an existing shut-off device shuts off the flow of water because the water becomes extremely hot, a considerable amount of time passes before the shut-off device can again automatically reset itself so that water can flow through the device. This is, of course, most inconvenient if the shut-off device operates whilst a person is using a shower or the like. We have found that the reason why the shut-off device does not quickly reset itself is that the detecting device which detects the water temperature is surrounded by the very hot water when the shut-off device operates. Thus, since the detector is trapped in a pool of hot water it maintains the device in the shut-off condition until that pool of water cools. Since it may take a considerable amount of time for the pool of water to cool the device prevents use of the shower or other water outlet to which it is connected for that time period.

The object of this invention is to provide a device which can quickly and effectively shut off supply of hot water in the event that the temperature of the water exceeds a predetermined limit and which can quickly reset itself after shut-off.

The invention therefore provides a shut-off device for use with a hot water tap and a cold water tap which can be manipulated by a user to provide water at a temperature selected by the user, said shut-off device comprising;
a body portion having an inlet for hot water for coupling to said hot water tap and an inlet for cold water for coupling to said cold water tap;
at least one outlet for said hot water and said cold water or for a mixture of the hot and cold water;
a valve member disposed in said body portion for selectively closing off hot water to the outlet;
a cold water path between said cold water inlet and said outlet which bypasses said valve member so that the cold water is not closed off by the valve member when the hot water is closed off to the outlet;
temperature sensing means for sensing the temperature of water and for activating said valve member only in the event that the temperature of the water exceeds a preset and predetermined hot temperature; and
said cold water path extending adjacent the temperature sensing means so that after shut-off of the device by the temperature sensing means which activates the valve member, the temperature sensing means is cooled by the cold water so that the valve member can be deactivated to allow hot water to pass through the shut-off device until the temperature of the water again exceeds the predetermined value.

Since the temperature sensing means is effectively cooled by the supply of cold water and therefore does not remain in a pool of hot water for a long period of time, the device is quickly reset and will allow hot water to flow through the device unless the temperature'of the hot water or of the mixture of hot and cold water exceeds the predetermined level. If the level is immediately exceeded once the device is again reset then the device will activate again to shut off the supply of hot water. This cycle will continue until the temperature of the water remains below the predetermined value.

Preferably, the temperature sensing means comprising an expansion element which expands as the water temperature increases to thereby force the valve member against a valve seat to shut off supply of hot water when the temperature of the water reaches the predetermined limit.

Preferably the body includes an inlet for cold water which communicates directly with a mixing chamber in which the expansion element is provided, said hot water being provided to said mixing chamber through said valve member when said valve member is in the open position so that the hot and cold water can mix in said mixing chamber and flow to said outlet to provide water of a desired temperature which is set by manipulation of the hot and cold water taps.

Preferably a first biasing means is provided for biasing said valve member into an open position and a second biasing means is provided for engagement with the expansion member, said second biasing means being stiffer than the first biasing means so that when the expansion member expands it first moves the valve element against the bias of the first biasing means until the valve element is seated against said valve seat and whereupon any further expansion of the expansion member is taken up by the second biasing means so as to avoid damage to the expansion member by virtue of continued expansion after the valve member is seated against said seat.

A preferred embodiment of the invention will be described, by way of example, in further detail with reference to the accompanying drawings in which:
Figure 1 is a cross-sectional view showing the preferred embodiment of a shut-off device installed according to the invention;
Figure 2 is a view of an outer canister of the preferred embodiment;
Figure 3 is a view of the shut-off device;
Figure 4 is a cross-sectional view through the shut-off of figure 3;
Figure 5 is a view along the line V-V of figure 4;
Figure 6 is a view along the line VI-VI of figure 4;
Figure 7 is a view along the line VII-VII of figure 4; and
Figure 8 is a view showing the device in a shut-off position.

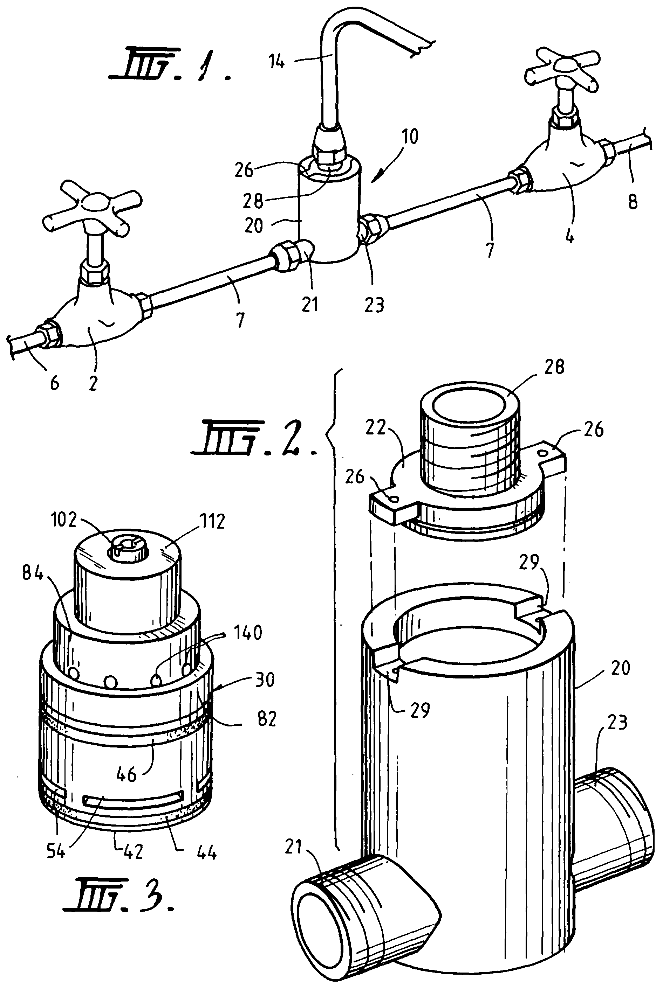

With reference to figure 1, the shut-off device embodying the invention is intended to be used with a hot water tap 2 and a cold water tap 4 which are connected to hot and cold water supply lines 6 and 8. The taps 2 and 4 are connected by suitable conduits 7 to the shut-off device generally shown at 10. The shut-off device has an outlet tube 28 which is coupled to suitable plumbing 14 which, in turn, may be coupled to a bath or basin outlet, shower rose or the like. The temperature of water to be supplied to the bath, basin or shower is selected by conventional manipulation of the hot and cold water taps 2 and 4. The shut-off device 10 acts to shut off the supply of hot water in the event that the temperature of the water, for some reason, exceeds a preset and predetermined hot temperature. For example, if the supply of hot water through the line 6 for some reason drastically increases thereby increasing the overall temperature of the water supplied through the device or the if the supply of cold water is shut-off momentarily for some reason thereby only leaving hot water to be supplied through the device, the shut-off device can act to prevent the hot water from being supplied to a user and scalding the user.

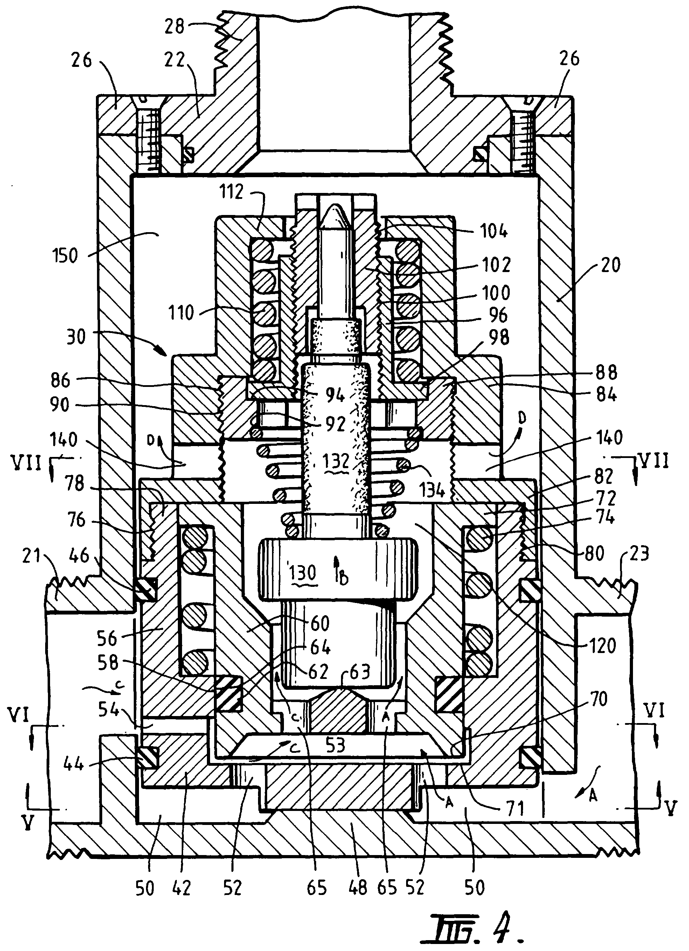

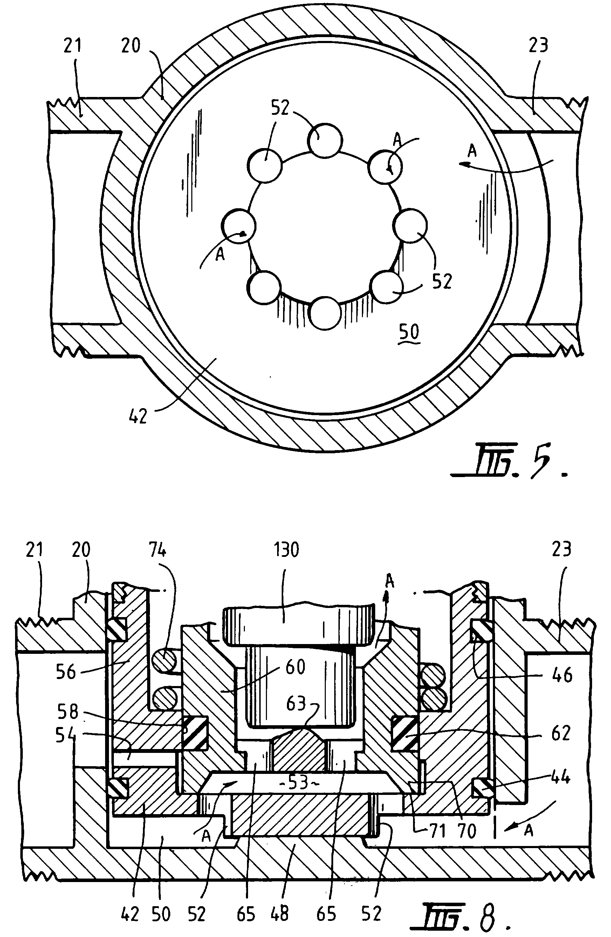

The shut-off device 10 is shown in separated perspective in figures 2 and 3 and generally comprises an outer canister 20 having a lid 22 and a body 30 which is adapted to be received within the canister 20. The canister 20 also has inlet tubes 21 and 23 which are adapted to be connected to the conduit 7 for the supply of water to the shut-off device.

The cap 22 includes a pair of keys 26 and an outlet tube 28. The keys 26 are received in slots 29 and the cap 22 is held is place by suitable screws or pins (not shown) which pass through the keys 26 into the canister 20. The keys 26 which are received in the slots 29 prevent rotation of the cap 28 when the outlet sleeve 28 has additional plumbing members (such as conduit 14) screw-threaded onto or off it.

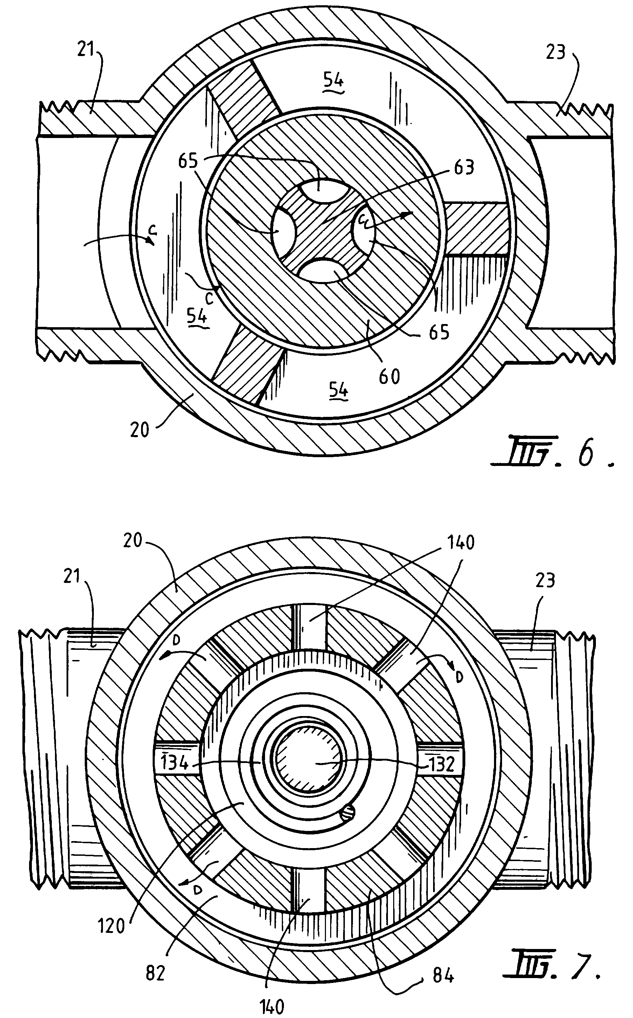

With reference to figure 4 which shows the shut-off device in detail, the body 30 is provided with a base section 42 which has a pair of spaced apart sealing O-rings 44 and 46. The base 42 sits on an upstanding portion 48 of the canister 20 so that a space 50 is provided between the bottom of the base 42 and the bottom of the canister 20. The cold water inlet 23 communicates with that space 50 and the space 50 is sealed by means of the lower O-ring 44. A plurality of apertures 52 are provided in the base 42 and which communicate with the space 50 for allowing cold water to pass through the apertures 52 into the body 30 as is shown by arrows A.

Hot water is supplied through the inlet tube 21 to a hot water inlet in the form of slots 54 in the base 42. The hot water inlet 54 is arranged above the O-ring 44 but below the O-ring 46. The O-rings 44 and 46 effectively seal off the hot water inlet 54 so that hot water must pass through the inlet 54 and will not pass above the O-ring 46 or below the O-ring 44 into the space 50. The base 42 is provided with a generally upstanding cylindrical wall 56 which is provided with a cylindrical step 58. A valve member 60 is arranged within the cylindrical wall 56 and within the step 58 and is provided with a seal 62 which effectively seals against the end 64 of the step 58. The valve member 60 has an integral valve element 70 at its lower end and a flange 72 at its upper end. A spring 74 is arranged between the step 58 and flange 72 and effectively biases the valve 60 upwardly in the direction of arrow B.

The cylindrical wall 56 of the base 42 is provided with an outer screw thread 76 on a reduced diameter upper portion 78 of the base 42. The screw thread 76 engages an internal screw thread 80 on a skirt portion 82 of an upper body portion 84. The upper body portion 84 has an internal screw thread 86 for receiving in screw-threaded fashion, an intermediate annulus 88 which has a corresponding screw thread 90 on its outer surface. The annulus 88 is provided with a step 92 and a step 94. A sleeve 96 is arranged on the step 94 by engagement of a flange 98 on the step 94 and is provided with an internal screw thread 100. A hollow dowel 102 having an outer screw thread 104 is screw-threaded into the sleeve 100. A stiff spring 110 is arranged between the flange 98 of the sleeve 96 and the top 112 of the upper body portion 84. The base 42 and upper body portion 84 generally define a mixing chamber 120 for the mixing of hot and cold water. Arranged within the mixing chamber 120 is an expansion element 130 which sits within valve member 60 and rests on a domed central portion 63 of the valve member 60. Expansion element 130 abuts a pin section 132 and a spring 134 is arranged between the expansion member 130 and the step 92 and surrounds the pin member 132. The spring 134 merely assists in retaining the pin 134 and expansion element 130 in position within the valve member 60, the base member 42 and the upper body portion 84.

Cold water which is supplied through the inlet openings 52 enters space 53 beneath the valve member 60 and then passes through openings 65 in the central portion 63 of the valve element so that it surrounds the expansion member 130 and arrives in mixing chamber 120. Hot water which enters the hot water inlet 54 in the direction of arrow C must pass underneath the valve member 62 between the valve element 70 and valve seat 71 which is formed by the internal surface of the bottom of the base 42. The hot water then also enters the space 53 and passes through the openings 65 to the mixing chamber 120 where it surrounds the element 130 and mixes with the cold water to provide water at a temperature selected by manipulation of the hot and cold water taps 2 and 4 (see figure 1).

Mixed hot and cold water in the chamber 120 leaves the chamber 120 through openings 140 in the upper body portion 84 in the direction of arrows D to space 150 between the canister 20 and the body 30. The water can then flow from the space 150 out through the outlet tube 28 into the conduit 14 to be supplied to the bath, basin or shower etc.

If the temperature of the water exceeds a predetermined and preset high temperature such as a temperature of 45°C the expansion member 130 will expand thereby pushing the valve member 60 in a direction opposite to the direction or arrow B against the bias of spring 74 so that the valve element 70 seals against valve seat 71 as shown in figure 8. This shuts off the supply of hot water from inlet 54 to the space 53 and opening 65 so that the supply of hot water into the mixing chamber 120 is completely shut off. Seal 62 which slides on end portion 64 of the step 58 prevents the hot water from passing between the base member 42 and the valve element 60.

As is also shown in 4 and 8, when the valve member 60 is closed by the expansion member 130 cold water can still be supplied to the mixing chamber 120 through the openings 52, space 53 and openings 65. The cold water passage defined by the space 50, openings 52, space 53 and openings 65 thereby effectively bypass the valve member 60 since cold water can be supplied to the chamber 120 regardless of the position of the valve member 60 and therefore cold water is not shut off when the valve element 70 seats on the seat 71. Thus, cold water can always flow through the device and pass the expansion member 130. Should the temperature of the water in the valve body exceed the predetermined temperature and cause shut off of the device the cold water supplied to the valve body 30 will continue to flow and will cool the expansion member 132 since the supply of hot water has been shut off. This will enable the expansion member to contract so that the valve element 70 can be biased away from the valve seat 71 by the spring 74 so that hot water can again be supplied through the device. Thus, since the expansion member 130 is effectively cooled by the cold water flowing through the device, it resets very quickly so that the shower or other appliance to which the device is connected can be used as soon as possible. If the water temperature remains at its normal level the shower, bath outlet, basin outlet etc. can continue in use. Should the temperature of the water again rise for any reason or immediately exceed the predetermined hot temperature once the hot water is again supplied through the device, the expansion member 130 will again immediately expand to cause the supply of hot water to be shut off. Once again, the cool water will cause the device to reset quickly so that water can again be supplied unless the predetermined temperature is immediately exceeded.

Since the supply of cold water bypasses the valve member 60 it ensures that the expansion member 130 is not maintained in a pool of hot water once the device has been shut-off and therefore can reset quickly. This enables the appliance to be again in full use as quickly as possible without having to wait until the pool of hot water surrounding the expansion member cools before the device will allow further hot water to be supplied. Thus, if the temperature of the water supply has been corrected the appliance is ready for use in a very short time. However, if the temperature of the water continues to be above the predetermined value the device will quickly shut off to prevent the very hot water from being supplied to the outlet.

Preferably the expansion member 130 has a steep rise so that no expansion of the expansion member occurs at a temperature of say 43°C or 44°C so that the flow of water through the device is not at all impaired at that temperature. However, once the temperature reaches 45°C the expansion member fully expands so that the hot water supply is shut off in the manner described above. The steep rise of the expansion at a temperature of say 44°C to 45°C thereby ensure that the device has no influence over the flow of water whilst the temperature is below the predetermined temperature but as soon as the temperature does reach that predetermined temperature it quickly shuts off the supply of hot water to prevent scalding.

Of course, the predetermined and preset temperature can be other than 45°C and in some applications may be 42°C or a lower or higher temperature depending on the environment in which the device is to be used.

When hot water above the predetermined temperature is detected in the mixing chamber 120 by the expansion element 130 and expansion of the expansion member 130 takes place the hot water surrounding the expansion member 130 may cause the expansion member to expand more than is necessary to close the valve element 70 against the valve seat 71. This additional expansion may cause damage to the expansion member 132 or the valve element 130 or seat 71. For this reason the spring 110 is provided so that continued expansion of the member 130 will be taken up by compression of the spring 110. Any additional expansion of the member 130 will cause the pin member 132 to abut against dowel 102 and push the dowel 102 together with the sleeve 96 with which the dowel 102 is screw threaded upwardly in the direction of arrow B against the bias of the spring 110. Since the spring 110 is very stiff it will not start to compress until the valve element 70 seats on the seat 71 and unless there is over expansion of the expansion member 130.

In the embodiments shown in the drawings the dowel 102 is screw-threaded into the sleeve 96 so that adjustment of the dowel 102 and therefore the position at which the pin 132 will contact the dowel 102 can be effected. However, it would be possible to do away with the adjustable dowel and merely provide the sleeve 96 with an integral and fixed end plate or abutment block which serves the same purpose as the dowel 102 but which would not allow adjustment of the dowel 102 relative to the sleeve 96.

Since modifications within the spirit and scope of the invention may readily be effected by persons skilled within the art, it is to be understood that this invention is not limited to the particular embodiment described by way of example hereinabove.

## Claims

1. A shut-off device (10) for use with a hot water tap (2) and a cold water tap (4) which taps can be manipulated by a user to provide mixed hot and cold water at a temperature selected by the user, said shut-off device (10) being adapted to be located between the taps (2, 4) and an outlet fixture (14) for the mixed water and comprising:
a body portion (30) having an inlet (54) for hot water adapted to be coupled to said hot water tap (2), an inlet (52) for cold water adapted to be coupled to said cold water tap (4), a mixing chamber (120) where the hot and cold water are mixed together and an outlet (140) for the mixed hot and cold water adapted to be coupled to said outlet fixture (14);
a valve member (60, 70) disposed in said body portion (30) for selectively closing off the flow path of hot water through said body (30);
temperature sensing means for sensing the temperature of the mixed water in the device and causing the valve member to close when the temperature reaches a predetermined hot temperature; characterised by
a cold water flow path (53, 65) between said cold water inlet (52) and said outlet (140) which bypasses said valve member (70) so that the flow of cold water is not closed off by the valve member (70) when the flow path of hot water is closed off;
the temperature sensing means (130) sensing the temperature of the mixed water in the device and for activating the valve member (60, 70) to completely close off the flow path of hot water only when the temperature of the mixed water reaches the predetermined hot temperature, the sensing means (130) causing substantially no movement of the valve member (60, 70) until the mixed water temperature reaches said predetermined hot temperature so that the valve member (60, 70) does not impair hot water flow until said hot temperature is reached, the valve member (60, 70) only then being moved by the temperature sensing means (130);
said cold water flow path (53, 65) passing adjacent the temperature sensing means (130) so that after th flow of hot water is closed by the valve member, the temperature sensing means (130) will be cooled by the cold water, whereby the sensing means will deactivate the valve member (60, 70) to again allow hot water to flow through the device (10) until the temperature of the mixed water again exceeds said predetermined hot temperature.

2. The device of claim 1, wherein the temperature sensing means (130) comprises an expansion member in contact with the valve member (60, 70) which expands when the mixed water temperature reaches said predetermined hot temperature to force the valve member (60, 70) against a valve seat (71) and close off the flow of hot water and which contracts when it is cooled by the cold water.

3. The device of claim 2, wherein the expansion member (130) is located in the mixing chamber so that the mixed water flows over said expansion member (120), said cold water being provided continuously to the mixing chamber (120) from the cold water inlet (52) while said hot water is provided to said mixing chamber (120) through said valve member (60, 70) only when said valve member is open, whereby the hot and cold water mix in said mixing chamber and flow to said outlet.

4. The device of claim 2, wherein a first biasing means (74) is provided for biasing said valve member (70) into an open position and a second biasing means (110) is provided for engagement with the expansion member (130), said second biasing means (110) being stiffer than the first biasing means (74), the expansion member (130) when it expands first moving the valve member (60, 70) against the bias of the first biasing means (74) until the valve member seats against said valve seat (71), whereupon any further expansion of the expansion member (130) is taken up by the second biasing means (110) to avoid damage to the expansion member (130), valve member (60, 70) or valve seat (71) by continued expansion of the expansion member.

5. The device of claim 2, wherein said cold water inlet (52) is located in a bottom portion of said body portion and said cold water flow path includes a space (53) in said valve member and at least one opening (65) in the valve member between said space (53) and said mixing chamber (120); and wherein said hot water inlet comprises at least one inlet opening in a side wall portion (56) of said body portion which communicates with said space (53) when said valve member is in an open position, but is closed off to said space when the valve member (60, 70) seats on the valve seat (71).

6. The device of claim 5, wherein a seal (44) is provided on said body portion to seal the hot water inlet (54) in the side wall portion of the body portion from the cold water inlet (52) in the bottom portion of the body portion and wherein said mixing chamber (120) and expansion member (130) are arranged within said valve member (60) so that the hot and cold water entering the mixing chamber (120) from the space (53) in the valve member surround the expansion member (130).

## Patentansprüche

1. Sperrvorrichtung (10) zur Verwendung mit einem Warmwasserhahn (2) und einem Kaltwasserhahn (4), wobei diese Hähne von einem Verbraucher betätigt werden können, um eine Mischung warmen und kalten Wassers bei einer vom Gebraucher gewählten Temperatur zu liefern, und die obengenannte Sperrvorrichtung zur Anordnung zwischen den Hähnen (2, 4) und einer Ausflußarmatur (14) für das gemischte Wasser geeignet ist , und
einen Körperteil (30) mit einem Einlaß (54) für warmes Wasser,der mit dem Warmwasserhahn verbunden werden kann, umfasst, sowie einen Einlaß für kaltes Wasser, der mit dem Kaltwasserhahn (4) verbunden werden kann, eine Mischkammer (120), wo das warme Wasser und das kalte Wasser zusammengemischt werden und einen Auslaß (140) für das gemischte Wasser, der an die obengenannte Auslaßarmatur gekoppelt kann;
ein im obengenannten Körperteil(30) angeordnetes Ventil (60, 70) zum selektiven Sperren des Strömungswegs des warmen Wassers durch diesen Körperteil (30);
einen Temperaturfühler zur Bestimmung der Temperatur des in der Vorrichtung anwesenden gemischten Wassers und zum Schließenlassen des Ventils beim Erreichen eines vorgegebenen hohen Temperaturwerts; durch
einen Kaltwasserströmungsweg (53, 65) zwischen dem Kaltwassereinlaß (52) und dem Auslaß (140 )gekennzeichnet, der das Ventil (70) umgeht, damit die Kaltwasserströmung nicht vom Ventil (70) gesperrt wird, wenn der Warmwasserströmungsweg gesperrt wird;
den Temperaturfühler (130), der die Temperatur des gemischten Wassers in der Vorrichtung bestimmt und das Ventil (60, 70) betätigt, um den Strömungsweg des warmen Wassers erst beim Erreichen der vorbestimmten Warmtemperatur vom gemischten Wasser abzusperren, wobei der Temperaturfühler wesentlich keine Bewegung des Ventils (60, 70) hervorbringt, bevor das gemischte Wasser die vorbestimmete warme Temperatur erreicht, so daß das Ventil (60, 70) erst beim Erreichen der obengenannten warmen Temperatur die Strömung warmen Wassers verhindert, wobei das Ventil (60, 70) nur dann vom Temperaturfühler (130) bewegt wird;
wobei der obengenannte Strömungsweg des kalten Wassers (53, 65) an dem Temperaturfühler (130) vorbeigeht, damit der Temperaturfühler (130), nachdem die Strömung warmen Wassers durch das Ventil abgesperrt ist, durch das kalte Wasser gekühlt wird, wodurch der Temperaturfühler das Ventil (60, 70) unwirksam machen wird, um Warmwasser wieder durch die Vorrichtung (10) fließen zu lassen, bis die Temperatur des gemischten Wassers noch einmal die vorbestimmte Warmtemperatur überschreitet.

2. Die Vorrichtung gemäß Anspruch 1, worin der Temperaturfühler (130) aus einem das Ventil (60, 70) berührendes Dehnungsglied besteht, das sich ausdehnt, sobald die Temperatur des gemischten Wassers den obengenannten Warmtemperaturwert erreicht, das Ventil (60, 70) gegen eine Aufsitzfläche (71) drückt und sperrt die Warmwasserströmung ab, und schrumpft, wenn er vom kalten Wasser gekühlt wird.

3. Die Vorrichtung gemäß Anspruch 2, worin das Dehnungsglied (130) in der Mischkammer so angeordnet ist, daß das gemischte Wasser über das obengenannte Dehnungsglied (120) (sic), wobei dieses kalte Wasser aus dem Kaltwassereinlauf (52) kontinuierlich der Mischkammer (120) geführt wird, während das warme Wasser zur Mischkammer (120) durch das Ventil (60, 70) zugeführt ist nur wenn das Ventil geöffnet ist, wodurch das warme Wasser und das kalte Wasser sich in der Mischkammer vermischen und zum Ablaß fließen.

4. Die Vorrichtung gemäß Anspruch 2, worin eine erstes Ausgleichsmittel (74) vorgesehen ist, um das Ventil (70) in eine geöffnete Stellung zu setzen, und ein zweites Ausgleichsmittel zum Eingriff mit dem Dehnungsglied (130) vorgesehen ist, wobei das zweite Ausgleichsmittel steifer, als das erste Ausgleichsmittel (74) ist, und das Dehnungsglied (130) bei seiner Dehnung das Ventil (60, 70) zunächst gegen die Kraft des ersten Ausgleichsmittels (74) verschiebt, bis das Ventil an dem Sitz (71) anliegt, worauf irgendeine zusätzliche Dehnung vom zweiten Ausgleichsmittel aufgenommen wird, um eine Beschädigung des Dehnungsglieds (130), des Ventils (60, 70) oder der Aufsitzfläche (71) durch weitere Dehnungs des Dehnungsglied zu vermeiden.

5. Die Vorrichtung gemäß Anspruch 2, worin der Kaltwassereinlauf (52) in einem unteren Teil des Körperteils und der Kaltwasserströmungsweg einen Raum (53) im Ventil und mindestens eine Öffnung (65) im Ventil zwischen dem Raum (53) und der Mischkammer (120) einschließt; und worin der Warmwassereinlauf aus mindestens einer Einlauföffnung in einem Seitenwandteil (56) des Körperteils besteht, die mit dem Raum (53) in Verbindung steht, wenn das Ventil in der geöffneten Stellung ist, aber vom Raum abgesperrt ist, wenn das Ventil (60, 70) an der Aufstizfläche (71) anliegt.

6. Die Vorrichtung gemäß Anspruch 5, worin eine Dichtung (44) am Körperteil versehen ist, um den Warmwassereinlauf (54) in dem Seitenwandteil des Körperteils gegen den Kaltwassereinlauf (52) im unteren Teil des Körperteils zu dichten und worin die Mischkammer (120) und das Dehnungsglied (130) innerhalb des Ventils (60) so angeordnet sind, daß das Warme Wasser und das kalte Wasser, die die Mischkammer (120) vom Raum (53) im Ventil betreten, das Dehnungsglied (130) umfließen.

## Revendications

1. Un dispositif d'interruption (10) pour être employé avec un robinet à eau chaude (2) et un robinet à eau froide (4), ces robinets pouvant être manipulés par l'usager pour fournir un mélange d'eau chaude et froide à une température choisie par l'usager, ledit dispositif d'interruption (10) étant adapté à être localisé entre les robinets (2, 4) et une pièce d'émission (14) pour l'eau mixte et comprenant:
une section de corps (30) ayant une ouverture d'admission (54) pour l'eau chaude qui peut être couplée audit robinet à eau chaude (2), une ouverture d'admission (52) pour l'eau froide qui peut être couplée audit robinet à eau froide (4), une chambre de mélange (120), où l'eau chaude et l'eau froide sont mélangées, et un orifice d'émission (140) pour le mélange d'eau chaude et d'eau froide qui peut être couplé à ladite pièce d'émission (14);
une soupape (60, 70) disposée dans ladite section de corps (30) pour interrompre sélectivement l'écoulement de l'eau chaude par ledit corps (30);
une sonde thermométrique pour déterminer la température de l'eau mixte dans le dispositif et pour faire se fermer à la soupape quand la température atteint un haut niveau prédéterminé; caractérisé par
un écoulement d'eau froide (53, 65) entre ladite ouverture pour l'admission de l'eau froide (52) et ledit orifice d'émission (140) qui met en dérivation ladite soupape (70), de sorte que l'écoulement d'eau froide n'est pas interrompu par la soupape (70) quand l'écoulement de l'eau chaude est arrêté;
la sonde thermométrique (130) qui détermine la température de l'eau dans le dispositif et qui commande la soupape (60, 70) pour n'interrompre complètement l'écoulement de l'eau chaude que quand la température de l'eau mixte atteint la température chaude prédéterminée, la sonde (130) ne produisant effectivement pas de mouvement de la soupape (60, 70) avant que la température de l'eau mixte n'atteigne la température chaude prédéterminée, de sorte que la soupape (60, 70) n'empêche pas l'écoulement de l'eau chaude avant que ladite température chaude ne soit atteignée, quand la soupape (60, 70) est déplacée par la sonde thermmométrique;
ledit écoulement d'eau froide (53, 65) passant à côté de la sonde thermométrique (130) de sorte que la sonde thermométrique, après que l'écoulement d'eau chaude est arrêté par la soupape, sera refroidie par l'eau froide, au moyen duquel la sonde thermométrique désactivera la soupape (60, 70) pour permettre à l'eau chaude de passer encore par le dispositif (10) jusqu'à ce que la température de l'eau mixte dépasse encore ladite température chaude prédéterminée.

2. Le dispositif de la revendication 1, dans lequel la sonde thermométrique (130) comprend, au contact avec la soupape (60, 70), un organe à dilatation qui se dilate quand la température de l'eau mixte atteint ladite température chaude prédéterminée pour forcer la soupape (60, 70) contre un siège de soupape (71) et pour interrompre l'écoulement d'eau chaude et qui se contracte quand il est refroidi par l'eau chaude.

3. Le dispositif de la revendication 2, dans lequel l'organe à dilatation (130) se trouve dans la chambre de mélange de sorte que l'eau mixte s'écoule sur ledit organe à dilatation (120) (sic), ladite eau froide étant fournie d'une façon continue à la chambre de mélange (120) de l'ouverture d'admission d'eau froide (52), tandis que ladite eau chaude n'est fournie à la chambre de mélange (120) par ladite soupape que lorsque ladite soupape (60, 70) est ouverte, et l'eau chaude et l'eau froide se mêlent dans ladite chambre de mélange et s'écoulent audit orifice d'émission.

4. Le dispositif de la revendication 2, dans lequel une premier moyen d'ajustement (74) est pourvu afin de mettre ladite soupape (70) dans une position ouverte ainsi qu'un deuxième moyen d'ajustement (110) est pourvu pour engagement avec l'organe à dilatation (130), ledit deuxième moyen d'ajustement (110) étant plus raide que le premier moyen d'ajustement (74), et l'organe à dilatation (130), quand il se dilate, déplace d'abord la soupape (60, 70) contre contre l'ajustement du premier moyen d'ajustement (74) jusqu'à ce que la soupape cale sur ledit siège de soupape (71), après quoi toute dilatation supplémentaire de l'organe à dilatation (130) est amortie par le deuxième moyen d'ajustement (110) pour éviter des avaries de l'organe à dilatation (130), de la soupape (60, 70) ou du siège de soupape (71) à cause de la dilatation continuée de l'organe à dilatation.

5. Le dispositif de la revendication 2, dans lequel ladite ouverture d'admission d'eau froide (52) se trouve dans une section inférieure de ladite portion de corps et ledit écoulement d'eau froide comprend un vide (53) dans ladite soupape et au moins une ouverture (65) dans la soupape entre ledit vide (53) et ladite chambre de mélange (120); et dans lequel ladite ouverture d'admission d'eau chaude comprend au moins une ouverture d'admmission dans une section de la paroi latérale (56) de ladite portion de corps qui est en communication avec ledit vide (53) quand ladite soupape est dans la position ouverte, mais est fermée audit vide quand la soupape (60, 70) cale sur le siège de soupape (71).

6. Le dispositif de la revendication 5, dans lequel un obturateur (44) est pourvu sur ladite portion de corps pour assurer l'étanchéité de l'ouverture d'admission d'eau chaude (54) dans la paroi laterale de la portion de corps contre l'ouverture d'admission d'eau froide (52) dans la section inférieure de la portion de corps et dans lequel ladite chambre de mélange (120) et l'organe à dilatation (130) sont disposés en dedans de ladite soupape (60) afin que l'eau chaude et l'eau froide qui entrent dans la chambre de mélange (120) du vide 53 dans la soupape entourent l'organe à dilatation (130).
